# EUROPÄISCHE PATENTSCHRIFT

(11) **EP 2 419 886 B1**
(45) Veröffentlichungstag und Bekanntmachung des Hinweises auf die Patenterteilung: **14.12.2016**
(21) Anmeldenummer: 10715507.9
(22) Anmeldetag: 14.04.2010
(51) Int. Cl.: G07D 7/12

(54) **VERIFIKATIONSVORRICHTUNG UND VERFAHREN ZUM VERIFIZIEREN BEUGENDER UND/ODER REFLEKTIERENDER SICHERHEITSMERKMALE VON SICHERHEITSDOKUMENTEN**
VERIFICATION SYSTEM AND METHOD FOR VERIFYING DIFFRACTIVE AND/OR REFLECTIVE SECURITY FEATURES OF SECURITY DOCUMENTS
DISPOSITIF DE VÉRIFICATION ET PROCÉDÉ POUR VÉRIFIER DES CARACTÉRISTIQUES DE SÉCURITÉ DIFFRINGENTES ET/OU RÉFLÉCHISSANTES DE DOCUMENTS DE SÉCURITÉ

(30) Priorität: 14.04.2009 DE 102009017708
(43) Veröffentlichungstag der Anmeldung: 22.02.2012
(73) Patentinhaber: Bundesdruckerei GmbH, 10969 Berlin (DE)
(72) Erfinder: DRESSEL, Olaf, 14641 Wustermark (DE); LEOPOLD, André, 10119 Berlin (DE); PAESCHKE, Manfred, 16348 Wandlitz (DE)
(74) Vertreter: Obst, Bernhard
(86) Internationale Anmeldenummer: PCT/EP2010/002485
(87) Internationale Veröffentlichungsnummer: WO 2010/118897

(56) Entgegenhaltungen:
- EP-A1- 1 826 729
- DE-A1- 10 028 239
- DE-A1- 10 028 241
- GB-A- 2 240 947

## Beschreibung

Die Erfindung betrifft eine Verifikationsvorrichtung für Sicherheitsdokumente mit mindestens einem beugenden und/oder reflektierenden Sicherheitsmerkmal, wobei die Verifikationsvorrichtung eine Auflageplatte mit einer Auflageebene zum Auflegen des Sicherheitsdokuments, eine optische Erfassungseinheit, eine Beleuchtungseinrichtung, mit der das Sicherheitsdokument beleuchtbar ist, eine Auswerteeinrichtung, die die mit der Erfassungseinrichtung erfassten Informationen auswertet, um eine Verifikation des mindestens einen Sicherheitsmerkmals auszuführen, und einen zwischen der Auflageebene und der Erfassungseinrichtung angeordneten Schirm umfasst, auf dem von dem mindestens einen Sicherheitsmerkmal gebeugtes oder reflektiertes Licht für ein Erfassen durch die Erfassungsvorrichtung abbildbar ist. Ferner betrifft die Erfindung ein Verfahren zum Verifizieren eines Sicherheitsdokuments.

Aus dem Stand der Technik ist es bekannt, unterschiedliche Sicherheitsmerkmale zu verwenden, um eine Echtheit und gegebenenfalls eine Unverfälschtheit von Dokumenten und/oder Gegenständen nachweisen zu können. Sicherheitsmerkmale werden daher zum Teil auch als Echtheitsmerkmale bezeichnet.

Als Sicherheitsmerkmale werden somit alle Merkmale angesehen, die ein Nachmachen oder Verfälschen eines Gegenstandes und/oder eines Dokuments gegenüber einem einfachen Kopieren erschweren. Eine Gruppe von Sicherheitsmerkmalen ist ausgebildet, um Licht zu beugen und/oder zu reflektieren. Diese Sicherheitsmerkmale können beispielsweise als Hologramme, metallisierte Strukturen, Gitter oder Ähnliches ausgebildet sein. Ihnen ist gemeinsam, dass sie auftreffendes Licht entweder gemäß der geometrischen Optik reflektieren oder gemäß der Wellenoptik beugen. Hierbei ist der zugrundeliegende physikalische Prozess unerheblich.

Zur Verifizierung solcher Sicherheitsmerkmale ist im Stand der Technik vorgesehen, das Sicherheitsmerkmal zumindest teilweise mit Licht, in der Regel gerichtetem Licht, zu beleuchten und reflektiertes oder gebeugtes Licht nachzuweisen.

Aus der DE 100 28 239 A1 ist eine Vorrichtung zur Auswertung von Echtheitsmerkmalen mit Beugungsstrukturen auf einem Dokument bekannt, das auf einer Untersuchungsfläche eines Prüfgeräts aufgelegt ist und von einer Beleuchtungsquelle angestrahlt ist, wobei das zu untersuchende Echtheitsmerkmal den Strahl der Beleuchtungsquelle beugt und auf eine Auswertungseinheit im Gerät projiziert. Um von der Art und dem Ort des auszuwertenden Beugungsmusters unabhängig zu sein, ist vorgesehen, dass das von dem zu untersuchenden Dokument abgeleitete Beugungsmuster auf eine Projektionsfläche projiziert wird. Es wird das projizierte Beugungsbild von einer Kamera, welche eine Matrix- oder Zeilenkamera sein kann, erfasst und ausgewertet. Bei den bekannten Vorrichtungen, die als Projektionsfläche eine Mattscheibe verwenden, ist mit dieser jeweils ein optisches Element gekoppelt, welches zum Lenken des zur Beleuchtung benutzten Lichts bzw. Strahls verwendet wird. Die Mattscheibe ist beweglich relativ zu einem auf der Untersuchungsfläche aufgelegten Dokument bewegbar ausgeführt, um über das hiermit gekoppelte optische Element einen Ausleuchtungsbereich auf dem Echtheitsmerkmal positionieren zu können. Bei den bekannten Vorrichtungen befindet sich somit jeweils mindestens ein optisches Element zwischen der Erfassungseinrichtung und dem Dokument bzw. der Untersuchungsfläche, d.h. im Sichtbereich bzw. Erfassungsbereich der Erfassungseinrichtung. Da ein Dokument mit einem zu überprüfenden Echtheitsmerkmal für dessen Verifikation auf die Überprüfungsfläche aufgelegt wird, befindet sich das Echtheitsmerkmal jeweils an einer leicht unterschiedlichen Position auf der Untersuchungsfläche. Somit ist es erforderlich, jeweils die Mattscheibe mechanisch mit dem optischen Element, welches das Licht zur Beleuchtung auf das Echtheitsmerkmal bringt, mechanisch relativ zu der Überprüfungsfläche zu bewegen. Sollen mit der Erfassungseinrichtung zusätzlich weitere Informationen, beispielsweise eine fotografische Abbildung des Dokuments, erfasst werden, so ist es erforderlich, die Mattscheibe gemeinsam mit dem darauf befestigten optischen Element aus dem Erfassungsbereich der Erfassungseinrichtung zu bewegen. Die bekannten Verifikationsvorrichtungen erfordern somit einen hohen mechanischen Aufwand für die Positionierung der Mattscheibe. Darüber hinaus ist eine Erfassung unterschiedlicher Informationen von einer Bewegungsgeschwindigkeit der Mattscheibe abhängig.

Darüber hinaus sind mechanisch gesteuerte Einrichtungen in der Regel anfällig für Störungen. Da eine Überprüfung von Sicherheitsmerkmalen nicht nur mit stationär aufgebauten Verifikationsvorrichtungen vorgenommen wird, sondern auch beispielsweise Sicherheitsmerkmale auf Verpackungen oder Ähnlichem zur Kennzeichnung von Gegenständen verwendet werden, besteht ein Bedürfnis, kompakte, robuste und störunanfällige Verifikationsvorrichtungen zu schaffen, die beispielsweise als tragbare Geräte eingesetzt werden können.

Aus der DE 100 28 241 A1 ist ein Dokumentenprüfgerät zur automatischen Prüfung von Wert- und Sicherheitsdokumenten bekannt, welches einen in X-Y-Richtung verfahrbaren Kreuzschlitten aufweist, auf welchem die zur Auswertung der Echtheitsmerkmale erforderlichen Komponenten angeordnet sind. Hierbei ist der in X-Richtung verfahrbare X-Schlitten des Kreuzschlittens innerhalb eines in Y-Richtung verfahrbaren äußeren Y-Schlittens verfahrbar angeordnet, wobei eine erste Gruppe von Auswerteeinheiten zur Auswertung der Beugungsstrukturen auf dem X-Schlitten mit Laser und Auswerteoptik und eine zweite Gruppe von Auswertekomponenten, beispielsweise zur Auswertung eines Textes, IR-Feldes und/oder eines Fotofeldes, auf dem Y-Schlitten angeordnet ist. Zusätzlich dazu kann zur Prüfung von Fluoreszenzmerkmalen eines Dokuments eine UV-Beleuchtungsquelle angeordnet sein, welche über eine separate ortsfeste Auswerteeinheit oder über die Auswerteeinheit auf dem X-Schlitten ausgewertet wird. Durch das Dokumentenprüfgerät kann eine automatische Untersuchung eines Dokumentes auf Echtheitsmerkmale durchgeführt werden, wobei auch Echtheitsmerkmale mit Beugungsstrukturen erkannt werden können.

In der EP 1 826 729 A1 ist ein Abbildungssensor für eine Unterscheidungsvorrichtung beschrieben, der eine Flüssigkristallblende umfasst, die zwischen einem Transmissionszustand und einem Reflexionszustand geschaltet werden kann. Der Reflexionszustand wird verwendet, um an der Blende reflektiertes Licht auf den Sensor abzubilden und diesen hinsichtlich seiner alterungsbedingten Empfindlichkeitsveränderung zu kompensieren. Unmittelbar vor der Erkennung eines Objekts wird die Blende in den reflektierenden Zustand geschaltet und das an der Blende reflektierte Licht gemessen. Die so erhaltenen Daten werden mit Daten verglichen, die für reflektiertes Licht zu einem früheren Referenzzeitpunkt erfasst sind. Anhand der Differenz werden Kompensationswerte für die Empfindlichkeit errechnet.

Aus der GB 2 240 947 A ist eine Authentifizierungsvorrichtung für Dokument mit lumineszierenden Sicherheitsmerkmalen bekannt. Die Authentifizierungsvorrichtung umfasst eine Lampe zum Anregen des lumineszierenden Materials eines Sicherheitsmerkmals, um ein Aussenden einer Strahlung zu erreichen. Eine Flüssigkristallblende, durch die das zu authentifizierende Dokument betrachtet wird, wird zwischen einem transparenten und opaken Zustand geschaltet. Die Vorrichtung umfasst einen Steuerschaltkreis zum Steuern des An- und Ausschaltens der Lampe und zum Schalten der Blende zwischen ihrem transparenten und opaken Zustand. Bei einem Betriebszustand ist in einem ersten Zeitabschnitt die Anregungsquelle eingeschaltet, um das lumineszierende Material anzuregen, während die Blende in ihrem opaken Zustand ist. In einem zweiten Zeitabschnitt, währenddessen die Anregungsmittel ausgeschaltet sind, ist die Blende in einem transparenten Zustand, wodurch nur eine phosphoreszierende Emission und keine fluoreszierende Emission in dem zweiten Abschnitt sichtbar ist. So können Sicherheitsmerkmale, die eine Phosphoreszenz zeigen, auf ihre Echtheit im Vergleich zu nachgebildeten fluoreszierenden Sicherheitsmerkmalen überprüft werden.

Der Erfindung liegt somit die technische Aufgabe zugrunde, eine verbesserte Verifikationsvorrichtung und ein Verfahren zum Verifizieren von Sicherheitsmerkmalen zu schaffen, die robuster und störunanfälliger als die bekannten Vorrichtungen sind. Ferner ist es wünschenswert, dass unterschiedliche Arten von Informationen über das Sicherheitsmerkmal und/oder ein Dokument erfasst werden können, auf dem das Sicherheitsmerkmal angebracht und/oder ausgebildet ist.

Die Aufgabe wird gelöst durch die Merkmale der unabhängigen Ansprüche 1 und 10. Die Aufgabe wird insbesondere dadurch gelöst, dass bei der eingangs genannten Vorrichtung der Schirm hinsichtlich mindestens einer optischen Eigenschaft, insbesondere seiner Opazität, steuerbar, z.B. schaltbar ausgebildet ist. Besonders bevorzugt kann die Opazität des Schirms zwischen einem diffus streuenden Zustand und einem transparenten Zustand variiert werden. Somit ist es möglich, sowohl erste Informationen, beispielsweise eine fotografische Abbildung des Dokuments und/oder des Sicherheitsmerkmals, zu erfassen, während der Schirm in dem transparenten Zustand betrieben wird und anschließend nach einer gesteuerten Veränderung der optischen Eigenschaft Opazität des Schirms in einen diffus streuenden Zustand auf dem Schirm an dem Sicherheitsmerkmal gebeugtes und/oder gestreutes Licht abgebildet wird, um dieses mit der Erfassungseinrichtung zu erfassen. Eine Umschaltung kann zeitlich schnell erfolgen. Hierdurch wird eine Möglichkeit geschaffen, in kurzer zeitlicher Abfolge unterschiedliche optische Eigenschaften des Sicherheitsdokuments mit der Erfassungseinrichtung zu erfassen. Eine Bewegung mechanischer Teile ist nicht erforderlich und kann unterbleiben.

Aus dem Stand der Technik sind unterschiedliche Schirme bekannt, die hinsichtlich einer optischen Eigenschaft steuerbar sind. Ein Schirm, der beispielsweise hinsichtlich seiner Opazität steuerbar ist, kann beispielsweise eine Polymer-Dispersed-Liquid-Crystal-Schicht umfassen, die über transparent ausgebildete Elektroden geschaltet werden kann.

Wird der Schirm im diffus streuenden Zustand betrieben, so ist es möglich, die an dem mindestens einen Sicherheitsmerkmal reflektierten oder gebeugten Lichtstrahlen auf dem Schirm abzubilden. Dies bedeutet, dass die Auftreffpunkte des reflektierten und/oder gebeugten Lichts für die Erfassungseinrichtung in Form von Streu- und/oder Reflexionspunkten sichtbar gemacht werden. An den Durchtrittsstellen erfolgt eine diffuse Streuung, so dass ein gerichteter Lichtstrahl auf dem Schirm an der Auftreffstelle eine für eine optische Erfassungseinrichtung erfassbare Abbildung erzeugt.
Als Quelle für das gerichtete Licht umfasst die Beleuchtungseinrichtung vorzugsweise einen Laser. Dies bietet den Vorteil, dass hohe Lichtintensitäten für ein Beleuchten des mindestens einen Sicherheitsmerkmals bereitgestellt werden. Somit können auch Sicherheitsmerkmale zuverlässig verifiziert werden, die nur eine geringe Beugungseffizienz aufweisen.

Bei einer Ausführungsform wird eine Reflexionseigenschaft des Schirms variiert. Flüssigkristalle in einer cholesterischen Phase zeigen eine nematische Ordnung mit einer helikalen Überstruktur. Cholesterische Flüssigkristallfilme zeigen daher eine selektive Reflexion von zirkularpolarisiertem Licht. Licht eines Drehsinns wird in einem Wellenlängenbereich selektiv reflektiert. Durch den Schirm kann somit Licht geeigneter zirkularer Polarisation durch den Schirm durchtreten. Das von dem zu verifizierenden Sicherheitsmerkmal gebeugte Licht trifft mit entgegengesetztem Drehsinn auf den Schirm und wird an diesem reflektiert und trifft erneut auf das Sicherheitsdokument, wo es beim Auftreffen diffus gestreut wird und eine Projektion, beispielsweise Projektionspunkte, erzeugt. Diese Projektion ist durch den Schirm hindurch erfassbar. Die Wellenlängenselektivität ist von einer Ganghöhe der helikalen Überstruktur abhängig. Da eine Ausrichtung der Flüssigkristalle durch ein Anlegen eines elektrischen Felds beeinflusst werden kann, kann die Reflexionseigenschaft des Schirms gesteuert werden. Auch andere Ausführungsformen, die die Reflexionseigenschaften steuerbar ändern, sind denkbar.
Ein weiterer Vorteil einer Verwendung eines in seinen optischen Eigenschaften variablen Schirms liegt darin, dass die Veränderung der optischen Eigenschaft genutzt werden kann, um eine Ausdehnung des Ausleuchtungsbereichs durch eine Änderung der optischen Eigenschaft zu variieren. Wird insbesondere die Opazität des Schirms vom transparenten Zustand in den diffus streuenden Zustand verändert, so erfolgt eine Strahlaufweitung beim Durchtritt des zur Anregung und Erzeugen des Ausleuchtungsbereichs verwendeten Lichts.

Der Schirm kann bezogen auf einen Erfassungsbereich der Erfassungsvorrichtung die Dokumentauflagefläche vollflächig oder teilflächig überdecken. Bevorzugt wird eine vollflächige Überdeckung oder eine Überdeckung, die den gesamten Erfassungsbereich der Erfassungsvorrichtung überdeckt. Somit können an unterschiedlichen Stellen angeordnete Sicherheitsmerkmale, die unter unterschiedlichen Beugungs- und/oder Reflektionswinkeln Licht auf den Schirm projizieren, zuverlässig verifiziert werden.

Der Schirm ist beabstandet von der Auflageebene ausgebildet. Bei einer bevorzugten Ausführungsform ist der Schirm auf einer der Auflageebene abgewandten Seite der Auflageeinrichtung ausgebildet. Die Auflageeinrichtung ist vorzugsweise als Platte, beispielsweise als Glas- oder Plexiglasplatte, ausgebildet, auf deren Rückseite der Schirm ausgebildet ist.

Bei einer Ausführungsform ist die Beleuchtungseinrichtung so ausgebildet, dass diese ein getrennt von dem Schirm ausgebildetes und beabstandet angeordnetes steuerbares optisches Element umfasst, mit dem ein durch einen gerichteten Lichtstrahl in der Auflageebene erzeugter räumlich begrenzter Ausleuchtungsbereich in der Auflageebene flächig positionierbar ist. Unter dem Begriff flächig positionierbar wird hier verstanden, dass der räumlich begrenzte Ausleuchtungsbereich in einer Ebene positioniert werden kann, die durch zwei nicht kollinear zueinander verlaufende Vektoren aufgespannt ist. Beim Beleuchten des Dokuments wird somit ein durch einen gerichteten Lichtstrahl in der Auflageebene erzeugter räumlich begrenzter Ausleuchtungsbereich in der Auflageebene flächig mittels eines getrennt von dem Schirm ausgebildeten und beabstandet angeordneten steuerbaren optischen Element so positioniert, dass das mindestens eine beugende und/oder reflektierende Sicherheitsmerkmal zumindest teilweise beleuchtet wird. Hierdurch wird das gebeugte oder reflektierte Licht auf dem Schirm abgebildet und kann von der Erfassungseinrichtung erfasst werden. Eine mechanische Bewegung der Mattscheibe bzw. des Schirm, wie es im Stand der Technik notwendig ist, ist somit nicht mehr erforderlich.

Bei dem steuerbaren optischen Element zum Positionieren des Ausleuchtbereichs kann es sich beispielsweise um ein so genanntes Micro Mirror Device handeln. Solcher MMD ist in der Lage, gesteuert Licht in unterschiedliche Raumrichtungen zu reflektieren. Der bewegliche Mikrospiegel kann mit hoher Präzision und hoher Geschwindigkeit gesteuert werden, um den Lichtstrahl einer Lichtquelle zielgerichtet zu reflektieren.

Das steuerbare optische Element ist vorzugsweise an die Wellenlänge des von der Lichtquelle erzeugten Lichts angepasst.

Bei einem kompakten Aufbau, bei dem es möglich ist, das gerichtet auf das mindestens eine Sicherheitsmerkmal auftreffende Licht unter einem möglichst stumpfen Winkel auf das mindestens eine Sicherheitsmerkmal zu leiten, wird das Licht zum Beleuchten des mindestens einen Sicherheitsmerkmals durch den Schirm auf das Sicherheitsmerkmal geführt. Bei einer solchen Anordnung ist es möglich, das steuerbare optische Element benachbart neben der Erfassungseinrichtung anzuordnen. Das gerichtete Licht kann beispielsweise von einer Lichtquelle erzeugt werden, die seitlich benachbart zu der Auflageebene angeordnet ist und das Licht zu dem steuerbaren optischen Element seitlich an dem Schirm vorbei oder ebenfalls durch den Schirm hindurch sendet.

Bei einer Ausführungsform der Erfindung ist eine Steuereinrichtung vorgesehen, die mit dem Schirm, der Erfassungseinrichtung und der Beleuchtungseinrichtung gekoppelt ist und zum Steuern so ausgebildet ist, dass beim Erfassen der Informationen mittels der Erfassungseinrichtung erste Informationen erfasst werden, während der Schirm im transparenten Zustand ist und mindestens eine zweite Information erfasst, während der Schirm im diffus streuenden Zustand ist. Solche Ausführungsformen ermöglichen es, unterschiedliche Informationen des Dokuments, auf dem das mindestens eine Sicherheitsmerkmal angeordnet ist, oder des Sicherheitsmerkmals zu erfassen und auszuwerten.

Bei einer bevorzugten Weiterbildung der Erfindung ist vorgesehen, dass die Auswerteeinrichtung ausgebildet ist, aus den ersten Informationen eine Position des mindestens einen beugenden und/oder reflektierenden Sicherheitsmerkmals zu bestimmen, und die Steuereinrichtung mit der Beleuchtungseinrichtung gekoppelt ist und von dieser so angesteuert wird, dass das mindestens eine beugende und/oder reflektierende Sicherheitsmerkmal gezielt beleuchtet wird, während die zweiten Informationen erfasst werden. Bei dieser Weiterbildung wird beispielsweise aus einer fotografischen Abbildung des Sicherheitsdokuments, welches im transparenten Zustand des Schirms aufgenommen ist, die Position des mindestens einen Sicherheitsmerkmals auf der Auflageebene bestimmt. Dies bedeutet, dass unabhängig von einer präzisen Positionierung des Dokuments mit dem mindestens einen Sicherheitsmerkmal auf der Auflageebene zuverlässig die Position des Sicherheitsmerkmals bestimmt wird. Anschließend wird dann gezielt der Ausleuchtungsbereich im Bereich des beugenden und/oder reflektierenden Sicherheitsmerkmals positioniert, um auf dem dann im diffusen Zustand betriebenen Schirm ein durch das Sicherheitsmerkmal erzeugtes Beugungs- und/oder Reflektionsmuster aufzunehmen und anschließend auszuwerten.

Bei einer Ausführungsform der Erfindung ist vorgesehen, dass die Auswerteeinheit ausgebildet ist, anhand der Position des mindestens einen beugenden und/oder reflektierenden Sicherheitsmerkmals Referenzinformationen zu errechnen, die mit den erfassten zweiten Informationen verglichen werden, um das mindestens eine beugende und/oder reflektierende Sicherheitsmerkmal zu verifizieren. Diese Ausführungsform ist in der Lage, das aufgrund der variablen Positionierung des Sicherheitsmerkmals auf der Auflageebene abweichende Beugungs- und/oder Reflektionsabbild, das sich auf dem Schirm bildet, jeweils vorauszuberechnen und mit dem tatsächlich gemessenen bzw. erfassten Abbild auf dem Schirm zu vergleichen. Hierdurch lässt sich eine höhere Präzision hinsichtlich des verifizierbaren und unterscheidbaren Beugungs- und Reflektionsbildes erreichen.

Bei einem weiteren Beispiel umfasst der Schirm eine Volumenstruktur oder mindestens eine der Auflageebene zugewandte Oberflächenstrukturierung, um an dieser nicht senkrecht auf den Schirm treffendes gebeugtes und/oder insbesondere vom Dokument reflektiertes Licht zu einer Streuung und/oder Reflexion, insbesondere Mehrfachstreuung und/oder Mehrfachreflexion, anzuregen. Diese kann oder können als Reflexions- und/oder Streupunkte leichter erfasst werden.
Ein Schirm mit einer solcher Struktur, kann ebenso wie ein Schirm, dessen dem Dokument zugewandte Seite teilverspiegelt ist, zur Verifikation von reflektierenden oder beugenden Sicherheitselementen eingesetzt werden, auch ohne dass der Schirm hinsichtlich einer optischen Eigenschaft gesteuert verändert werden kann. Wesentlich ist, dass das Licht, welches auf das Sicherheitsmerkmal gerichtet wird, in beiden Fällen durch den Schirm hindurch auf das Dokument gelenkt werden kann. Hierbei wird bei der ersten Ausführungsform ausgenutzt, dass das Licht im Wesentlichen senkrecht oder nahezu senkrecht durch den Schirm tritt und somit keine oder nur eine geringe Beeinflussung durch die Volumen- oder Oberflächenstruktur des Schirms erfährt. Das von dem Sicherheitsmerkmal reflektierte und/oder gebeugte Licht trifft hingegen in der Regel unter einem von 90°deutlich abweichenden Winkel auf den Schirm und wird, wie erläutert, stärker beeinflusst, so dass Streupunkte auf dem Schirm erfassbar sind.

Ist der Schirm halb verspiegelt, so tritt das Licht durch den Schirm auf das Sicherheitsmerkmal, wird gebeugt und/oder reflektiert und teilweise an dem teilverspiegelten Schirm auf das Dokument zurückgeworfen und erzeugt eine Projektion. Beispielsweise werden Projektionspunkte erzeugt, sofern einzelne gerichtete Lichtstrahlen durch die Reflexion und/oder Beugung an dem Sicherheitsmerkmal erzeugt und von diesem zurückgeworfen werden. Da der Schirm nur teilverspiegelt ist, können die Projektion, die beispielsweise Projektionspunkte umfasst, und andere Merkmale durch den teilverspiegelten Schirm wahrgenommen werden. Diese Ausführungsformen stellen somit alternative, selbstständige erfinderische Lösungen der technischen Aufgabe dar. Abweichend wird bei der teilverspiegelten Ausführungsform von dem mindestens einen Sicherheitsmerkmal gebeugtes oder reflektiertes Licht für ein Erfassen durch die Erfassungseinrichtung nicht auf den Schirm, sondern mittels einer Reflexion an dem Schirm auf das Dokument zurück abgebildet. Bei einer Ausführungsform eines Verfahren zum Verifizieren eines Sicherheitsdokuments ist somit das Erfassen des mittels des Schirms abgebildeten an dem mindestens einen Sicherheitsmerkmal gebeugten oder reflektierten Lichts ein Erfassen von an dem Schirm reflektierten und auf das Sicherheitsdokument zurückreflektierten Lichts des an dem mindestens einen Sicherheitsmerkmal gebeugten oder reflektierten Lichts.

Nachfolgend wird die Erfindung unter Bezugnahme auf eine Zeichnung näher erläutert. Hierbei zeigen:
- Fig. 1: eine schematische Darstellung einer Verifikationsvorrichtung;
- Fig. 2: eine schematische Darstellung eines Ausschnitts einer weiteren Ausführungsform einer Verifikationsvorrichtung;
- Fig. 3: eine schematische Darstellung eines Ausschnitts nach einem weiteren Beispiel einer Verifikationsvorrichtung; und
- Fig. 4: eine schematische Darstellung einer Verifikationsvorrichtung nach einer weiteren Ausführungsform einer Verifikationsvorrichtung.

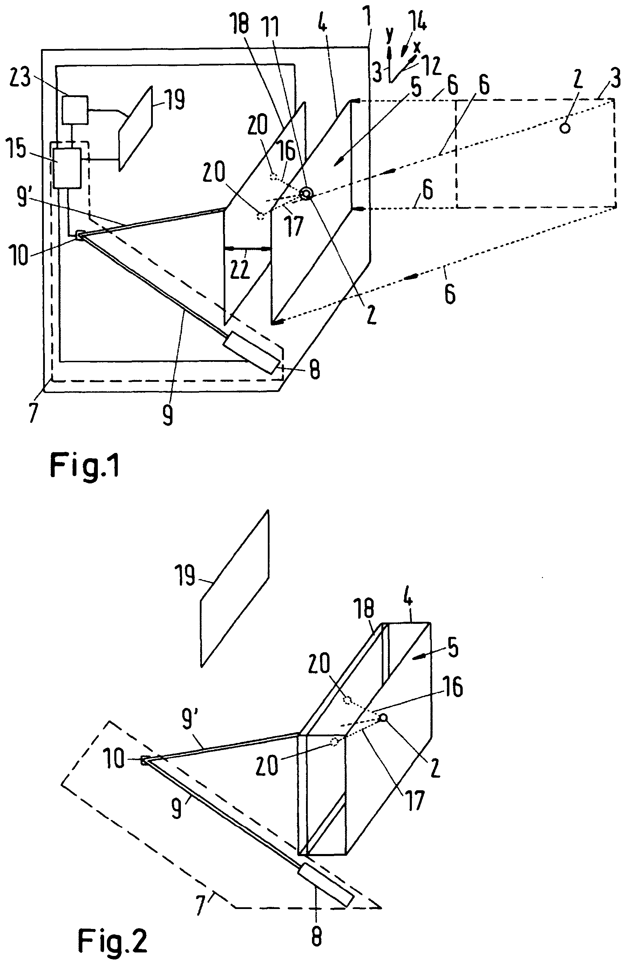

In Fig. 1 ist schematisch eine Verifikationsvorrichtung 1 dargestellt. Die Verifikationsvorrichtung 1 ist ausgebildet, um mindestens ein beugendes und/oder reflektierendes Sicherheitsmerkmal 2 zu verifizieren. Unter einer Verifikation wird jeder Vorgang verstanden, bei dem untersucht wird, ob ein entsprechendes Sicherheitsmerkmal vorhanden ist und, sofern dies der Fall ist, gegebenenfalls zusätzlich bestimmten Vorgaben entspricht, um eine Echtheit des Sicherheitsmerkmals ermitteln zu können. Das Sicherheitsmerkmal 2 ist in der Regel auf einem Sicherheitsdokument 3 ausgebildet und/oder angeordnet. Unter einem Sicherheitsdokument werden beispielsweise Personaldokumente wie Reisepässe, Personalausweise, Führerscheine, Identifikationskarten, Wertdokumente, wie Schecks, Kreditkarten, Postwertzeichen, Wertmarken, aber auch Verpackungen oder Gegenstände verstanden, die durch ein Sicherheitsmerkmal, welches auch als Echtheitsmerkmal bezeichnet wird, gekennzeichnet sind.

Die Verifikationsvorrichtung 1 umfasst eine Auflageplatte 4 mit einer Auflageebene 5. Die Auflageebene wird bei den meisten Ausführungsformen planar eben ausgebildet sein. Es sind jedoch Ausführungsformen denkbar, bei denen die Auflageebene gekrümmt ist, um auf einer gekrümmten Fläche aufgebrachte Sicherheitsmerkmale prüfen zu können. In jedem Fall ist die Auflageebene so ausgestaltet, dass das Sicherheitsmerkmal gegen die Auflageebene anliegt.

Bei der in Fig. 1 dargestellten Ausführungsform liegt somit das gestrichelt angedeutete Sicherheitsdokument 1 mit dem Sicherheitsmerkmal 2 gegen die Auflageplatte 4, d.h. gegen die Auflageebene 5, an, wie dies mittels Pfeilen 6 angedeutet ist.

Um das Sicherheitsmerkmal 2, welches ausgebildet ist, auftreffendes Licht zu beugen und/oder zu reflektieren, verifizieren zu können, ist es somit erforderlich, das Sicherheitsmerkmal zumindest teilweise auszuleuchten. Hierfür umfasst die Verifizierungsvorrichtung 1 eine Beleuchtungseinrichtung 7. Die Beleuchtungseinrichtung 7 umfasst in der dargestellten Ausführungsform eine als Laser ausgebildete Lichtquelle 8. Die Lichtquelle 8 emittiert gerichtetes Licht 9. Das gerichtete Licht 9 der Lichtquelle 8 wird auf ein steuerbares optisches Element 10 gelenkt. Dieses lenkt das gerichtete Licht in einen Lichtstrahl 9' um, der in der Auflageebene einen räumlich begrenzten Ausleuchtungsbereich 11 erzeugt. Das steuerbare optische Element ist so ausgebildet, dass es den Ausleuchtungsbereich 11 in der Auflageebene 5 flächig positionieren kann. Dies bedeutet, dass der räumlich begrenzte Ausleuchtungsbereich 11 an unterschiedlichen Positionen der Auflageebene 5 positioniert werden kann. Er kann somit sowohl in X-Richtung 12 als auch in Y-Richtung 13 eines Koordinatensystems 14 hinsichtlich seiner Position verschoben werden. Das Koordinatensystem 14 ist mit der Auflageebene 5 assoziiert.

Das steuerbare optische Element 10 ist vorzugsweise als so genannten Micro Mirror Device (MMD) ausgebildet. Dieser umfasst einen Mikrospiegel, der angesteuert positionierbar ist. Bei einigen Ausführungsformen schwingt der Spiegel kontinuierlich. Hierdurch wird der reflektierte Lichtstrahl 9' bzw. der Ausleuchtungsbereich 11 abtastend über ein Gebiet der Auflageebene, vorzugsweise die gesamte Auflageebene umfassend, geführt. Soll ausschließlich das Sicherheitsmerkmal 2 ausgeleuchtet werden, so ist die Emission des Lichts 9 der Lichtquelle 8 zeitlich mit der Schwingung des Spiegels des steuerbaren optischen Elements 10 zu synchronisieren. Dies kann über eine Steuereinrichtung 15 erreicht werden. Hierbei wird die Lichtquelle 8 gepulst betrieben. Die Lichtquelle emittiert nur Licht 9, während dieses über das steuerbare optische Element 10 auf das Sicherheitsmerkmal 2 gelenkt wird.

Soll ein wellenlängenselektives Sicherheitsmerkmal verifiziert werden, welches beispielsweise ein optisch dickes Gitter, z.B. ein Volumenhologramm, umfasst, so ist das steuerbare optische Element bevorzugt an die entsprechende Wellenlänge angepasst ausgewählt. Wird als Lichtquelle beispielsweise ein Nd:YAG-Laser verwendet, der Licht der Wellenlänge von 1.064 nm erzeugt, wird häufig das frequenzverdoppelte Licht mit einer Wellenlänge von 532 nm verwendet. Ein solches im grünen Wellenlängenbereich reflektierendes und/oder beugendes Sicherheitsmerkmal kann beispielsweise auch visuell verifiziert werden. In einem solchen Fall ist das steuerbare optische Element an diese Wellenlänge von 532 nm angepasst. Sollen Sicherheitsmerkmale verifiziert werden, die spiegelnd ausgebildet sind oder ein optisch dünnes Gitter umfassen, beispielsweise ein Metallfaden oder eine refraktive Prägeschicht, so ist eine präzise Wellenlängenanpassung nicht erforderlich.

Grundsätzlich kann die Anregung angepasst an das entsprechende zu verifizierende Sicherheitsmerkmal in jedem geeigneten Wellenlängenbereich, d.h. im infraroten, sichtbaren und/oder ultravioletten Wellenlängenbereich erfolgen.

Wird das Sicherheitsmerkmal 2 beleuchtet, so wird an dem Sicherheitsmerkmal 2 das von dem steuerbaren optischen Element 10 auf die Auflageebene 5 auftreffende reflektierte Licht 9' reflektiert und/oder reflektierend gebeugt. Dies tritt somit ein, wenn der Ausleuchtungsbereich 11 das optische Element zumindest teilweise, vorzugsweise vollflächig, beleuchtet ist. Hierbei ist natürlich vorausgesetzt, dass bei einem beugenden Sicherheitsmerkmal die übrigen Beugungsbedingungen oder Voraussetzungen für eine Beugung/Reflexion (z.B. ein Einstrahlwinkel, eine Wellenlänge des Lichts usw.) erfüllt sind. Das Sicherheitsmerkmal 2 ist so ausgebildet, dass es reflektiertes und/oder gebeugtes Licht 16, 17 durch die Auflageplatte 4 zurückwirft, die transparent ausgebildet ist.

Beabstandet von der Auflageebene 5 ist ein Schirm 18 angeordnet. Auf dem Schirm wird das reflektierte und/oder gebeugte Licht 16, 17 abgebildet. Um an Auftreff- und/oder Durchtrittsstellen durch den Schirm 18 für eine Erfassungseinrichtung 19 erfassbare Reflexionspunkte und/oder Streupunkte 20 zu erzeugen, ist es vorteilhaft, wenn der Schirm 18 auftreffendes Licht diffus streut. Die Reflexions- und/oder Streupunkte 20 bilden auf dem Schirm 18 ein Muster, welches charakteristisch für das jeweilige Sicherheitsmerkmal 2 ist. Eine Form und Abmessung des Musters ist von einer Geometrie sowohl der Lichtführung als auch einer Anordnung der Auflageebene 5, des Schirms 18 und der Erfassungseinrichtung 19 relativ zueinander abhängig. Beispielsweise ergibt es sich für den Fachmann, dass eine Größe des erzeugten Musters der Reflexions- und/oder Streupunkte 20 von einem Abstand 22 der Auflageebene 5 von der Ebene des Schirms 11 abhängig ist. Je größer der Abstand 22 des Schirms 18 von der Auflageebene 5 ist, desto größer wird ein Muster, das durch Reflexions- und/oder Streupunkte 20 ausgebildet ist, die durch voneinander divergierende reflektierte und/oder gebeugte Lichtstrahlen 16, 17 erzeugt sind.

Das durch die Streupunkte und/oder Reflexionspunkte 20 auf dem Schirm 18 abgebildete Muster wird von der Erfassungseinrichtung 19 erfasst. Bei der Erfassungseinrichtung 19 kann es sich um jede beliebige Erfassungseinrichtung handeln, die eine optische Abbildung erfassen kann. Vorzugsweise handelt es sich um eine Digitalkamera. Die von der Erfassungseinrichtung 19 erfassten Informationen werden mit einer Auswerteeinrichtung 23 ausgewertet, um das Sicherheitsmerkmal 2 zu verifizieren. In einer einfachsten Verifikationsausführungsform wird lediglich geprüft, ob ein Muster durch die Erfassungseinrichtung 19 erfasst ist. Sind die Verifikationsanforderungen höher gestellt, so wird die erfasste Abbildung mit Vorgabedaten oder Vorgabeinformationen verglichen, die das Sicherheitsmerkmal 2 charakterisieren. Hierbei ist die Auswerteeinrichtung 23 bei einigen Ausführungsformen in der Lage, anhand einer Position des Sicherheitsmerkmals 2 in der Auflageebene 5 ein erwartetes Muster zu berechnen und mit dem erfassten Muster zu vergleichen, um die Verifikation, beispielsweise die Überprüfung der Echtheit des Sicherheitsmerkmals 2, auszuführen.

Um beispielsweise die Position des Sicherheitsmerkmals 2 auf einfache Weise bestimmen zu können, ist es vorteilhaft, wenn mittels der Erfassungseinrichtung 19 eine fotografische Abbildung der Auflageebene 5 bzw. des darauf aufliegenden Sicherheitsdokuments 3 erfassbar ist. Da eine solche Erfassung durch einen diffus streuenden Schirm hindurch nicht möglich ist, ist der Schirm 18 so ausgebildet, dass er hinsichtlich einer optischen Eigenschaft, beispielsweise seiner Opazität, steuerbar ausgebildet ist. Über die Steuereinrichtung 15, oder bei anderen Ausführungsformen über eine weitere Steuereinrichtung, kann somit eine Opazität des Schirms 18 gesteuert werden.

Als steuerbarer Schirm 18 kann jeder Schirm verwendet werden, der hinsichtlich seiner Opazität steuerbar ist. Aus dem Stand der Technik sind unterschiedliche Ausführungsformen bekannt, die verwendet werden können. Voraussetzung ist, dass der Schirm 18 zumindest in einem transparenten Zustand und in einem diffus streuenden Zustand betreibbar ist. Beispielsweise kann der Schirm 18 eine Polymer-Dispersed-Liquid-Crystal-Schicht umfassen (PDLC-Schicht). Über relativ zu dieser PDLC-Schicht angeordnete transparente Elektroden können Flüssigkristalle in der Schicht ausgerichtet werden, was eine Transparenzänderung bzw. Änderung des Streuverhaltens des Schirms auslöst.

Da eine Positionierung des Sicherheitsdokuments 3 auf der Auflageebene 5, d.h. eine Positionierung des Sicherheitsmerkmals 2 in der Auflageebene 5, variabel ist, wird bei einer Ausführungsform der Schirm 18 zunächst im transparenten Zustand betrieben. Mittels der Erfassungseinrichtung 19 werden nun erste Informationen erfasst. Dies wird in der Regel eine fotografische Abbildung der Auflageebene 5 sein. Anhand bekannter Mustererkennungsverfahren ist es unter Ausnutzung von gegebenenfalls vorhandenen Referenzdaten über Sicherheitsdokumente 3 oder das Sicherheitsmerkmal 2 für die Auswerteeinrichtung 23 möglich, eine Position des Sicherheitsmerkmals 2 in der Auflageebene 5 zu ermitteln. Anschließend wird über die Steuereinrichtung 15 das steuerbare optische Element 10 sowie gegebenenfalls die Lichtquelle 8 so angesteuert, dass der Ausleuchtungsbereich 11 das Sicherheitsmerkmal 2 zumindest teilweise überdeckt. Ferner wird der Schirm 18 in einen diffus streuenden Zustand versetzt. In diesem Zustand wird nun das gebeugte und/oder reflektierte Licht 16, 17 über die Reflexions- und/oder Streupunkte 20 für eine optimale Erfassung auf dem Schirm 18 abgebildet. Mit der Erfassungseinrichtung 19 werden nun zweite Informationen erfasst, die zur Verifikation des Sicherheitsmerkmals 2, wie oben bereits beschrieben ist, verwendet werden.

Es versteht sich für den Fachmann, dass eine Vielzahl weiterer Untersuchungen vorgenommen werden kann, um das Sicherheitsmerkmal 2, weitere Sicherheitsmerkmale des Sicherheitsdokuments 3 und/oder das Sicherheitsdokument 3 selbst zu analysieren und/oder zu verifizieren. Hierzu können weitere Elemente in der Verifikationsvorrichtung vorgesehen sein. Insbesondere kann es vorgesehen sein, dass die Beleuchtungseinrichtung 7 weitere Lichtquellen (nicht dargestellt) umfasst, die das Sicherheitsdokument und/oder darin enthaltene Sicherheitsmerkmale mit sichtbarem, infrarotem oder UV-Licht anregt. Die Anordnung der einen oder von mehreren Lichtquellen der Beleuchtungseinrichtung können so ausgeführt sein, dass das Licht unmittelbar auf die Auflageebene trifft und nicht durch den Schirm 18 hindurchtritt.

Das für die Verifikation des reflektierenden und/oder beugenden Sicherheitsmerkmals 2 verwendete und von dem steuerbaren optischen Element 10 reflektierte Licht 9' tritt jedoch vorzugsweise durch den hinsichtlich seiner optischen Eigenschaften steuerbaren Schirm 18 hindurch. Hierdurch ist es möglich, über eine Steuerung der Opazität eine Strahlaufweitung des reflektierten Lichts 9 zu erreichen. Bei einer bevorzugten Ausführungsform kann die Transparenz (ein Anteil der diffusen Streuung) über einen großen Bereich stufenlos gesteuert werden. Abhängig von der gewählten Transparenz (dem Anteil der diffusen Streuung) findet eine unterschiedliche Strahlaufweitung statt, die sich in einer unterschiedlichen Größe des Ausleuchtungsbereichs in der Auflageebene auswirkt. Dadurch kann zum einen erreicht werden, dass eine größere Fläche des Sicherheitsmerkmals ausleuchtbar ist. Darüber hinaus erfolgt ein Ausleuchten des Sicherheitsmerkmals 2 auch bei einer weniger präzisen Positionierung des Ausleuchtungsbereichs. Ferner kann über eine Variation einer Größe des Ausleuchtungsbereichs auch eine Variation des erzeugten Musters herbeigeführt werden, sofern das Sicherheitsmerkmal in unterschiedlichen ausgeleuchteten Bereichen unterschiedlich reflektiert und/oder beugt. Dies gilt insbesondere für Hologramme. Eine Variation des Musters bei einer Variation der Transparenz (diffuse Streuung) kann somit ebenfalls zur Verifikation bestimmter Sicherheitsmerkmale herangezogen werden.

Eine Fokussierung des Lichts wird vorzugsweise so gewählt, dass ein Fokuspunkt in dem Schirm liegt. Hierdurch wird eine Transmission durch den Schirm gesteigert, wenn dieser sich in dem diffus streuenden Zustand befindet.

Um weitere Analysen und Verifikationsschritte des Sicherheitsmerkmals 2 und/oder des Sicherheitsdokuments 3 ausführen zu können, kann der Schirm 18 weitere optische, elektrische, chemische und insbesondere Filtereigenschaften aufweisen.

Um eine Abklingzeit eines fluoreszierenden Sicherheitsmerkmals auf einfache Weise analysieren zu können, ist bei einer Ausführungsform vorgesehen, dass nach einer Anregung eines solchen Sicherheitsmerkmals zunächst eine Erfassung des durch den Schirm 18 transmittierten Lichts vorgenommen wird. Zeitlich versetzt wird eine zweite Erfassung vorgenommen, bei der die Transparenz des Schirms verändert, vorzugsweise verringert ist. Ist eine Transparenzänderung angepasst an eine Abklingzeit der Fluoreszenz, d.h. eine Lebensdauer der die Fluoreszenz auslösenden Zustände in dem jeweiligen Sicherheitsmerkmal, so kann erreicht werden, dass die erfasste Helligkeit und/oder Intensität in beiden Erfassungsschritten identisch ist. Weicht eine tatsächliche Abklingzeit von einer erwarteten Abklingzeit ab, so sind Intensitäts- und/oder Helligkeitsunterschiede und/oder Farbunterschiede wahrnehmbar. Hierüber ist eine Verifikation einzelner Fluoreszenzstoffe auf einfache Weise durch einen Vergleich von erfassten Informationen möglich. Durch die Variierung der Schirmeigenschaften während der Verifikation kann die lokale Anregungsenergie variiert werden.

In Fig. 2 ist schematisch ein Ausschnitt einer weiteren Ausführungsform dargestellt. Gleiche technische Merkmale sind mit denselben Bezugszeichen versehen. Bei der schematisch in Fig. 2 dargestellten Ausführungsform ist der Schirm 18 auf einer ausgedehnt ausgebildeten Auflageplatte 4 ausgebildet. Diese Ausführungsform weist den Vorteil auf, dass der Schirm 18, der sonst in der Regel als Folie ausgebildet ist, eine höhere mechanische Stabilität aufweist. Ein solches Verifikationsgerät ist unter Einsatzbedingungen, unter denen Vibrationen und/oder Stöße auftreten, besser geeignet, da durch die Vibrationen erzeugte Auslenkungen der Folie, die bei einer Ausführungsform nach Fig. 1 auftreten können, bei dieser Ausführungsform nicht auftreten. Diese Auslenkungen beeinflussen die Gestalt eines Musters aus Reflexions- und/oder Streupunkten.

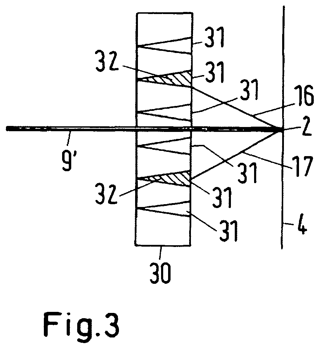

In Fig. 3 ist weiter ein Ausschnitt eines weiteren Beispiels schematisch dargestellt, bei der der Schirm 30 beispielsweise kegelförmige Elemente 31 aufweist. Diese sind bei einigen Ausführungen als Aussparungen ausgeführt. Bei anderen Ausführungsformen sind die kegelförmigen Elemente 31 durch ein Material gefüllt, welches einen von dem übrigen Schirmmaterial abweichenden Brechungsindex aufweist. Die innenliegenden Strukturen sind als Kollimator so ausgelegt, das sie die in der Regel nahezu lotrecht zum Dokument hin verlaufenden anregenden Strahlen sammeln und durchleiten. Die vom Dokument ausgehenden oder reflektierten Strahlen hingegen haben eine wesentlich höhere Abweichung von der senkrechten und werden am Schirm durch einen Diffusor aufgeweitet und verursachen einen detektierbaren Helligkeitsunterschied. Den Ausführungsformen ist gemeinsam, dass nicht lotrecht auf den Schirm 30 auftreffendes gebeugtes und/oder reflektiertes Licht des Sicherheitsmerkmals 2 Reflexions- und/oder Streupunkte 33, insbesondere am Rand der Kegelelemente 31, verursachen. Diese erleichtern eine Erfassung der hierdurch erzeugten Reflexions- und/oder Streupunkte 32. Bei dieser Ausführungsform wird das zum Beleuchten des Sicherheitsmerkmals 2 verwendete Licht 9' vorzugsweise so durch den Schirm 30 geführt, dass dieses zwischen den kegelförmigen Elementen, d.h. an diesen vorbei, geführt wird.

Es versteht sich für den Fachmann, dass hier lediglich beispielhafte Ausführungsformen der Erfindung beschrieben sind. Die einzelnen beschriebenen Merkmale können einzeln oder in beliebiger Kombination verwendet werden, um die Erfindung auszuführen.

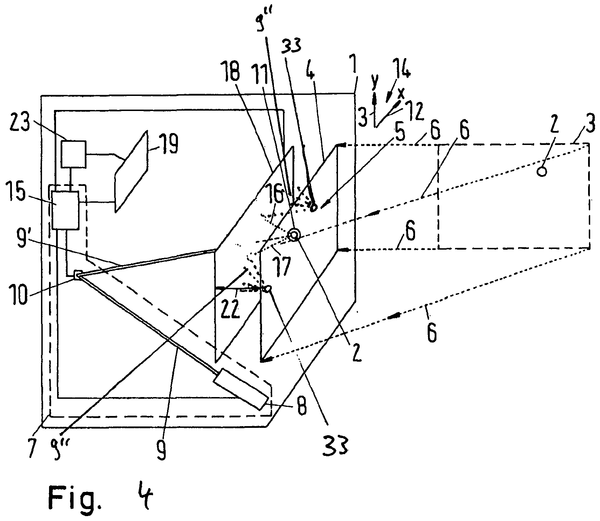

In Fig. 4 ist eine Ausführungsform ähnlich zu der nach Fig. 1 dargestellt, bei der jedoch eine Reflexionseigenschaft des Schirms 18 steuerbar ist. Das an dem Sicherheitsmerkmal 2 reflektierte/gebeugte Licht 9' wird teilweise an einer dem Sicherheitsdokument 3 zugewandten Seite des Schirm reflektiert und auf das Sicherheitsdokument 3 zurückgeworfen. Dort sind dann Projektionspunkte 33 erkennbar, die durch den Schirm 18 hindurch von der Erfassungseinrichtung 19 erfassbar sind.

Ist der Schirm mittels Flüssigkristallen in cholesterischer Phase ausgestaltet, so wird beispielsweise selektiv zirkularpolarisiertes reflektiertes/gebeugtes Licht, das von dem Sicherheitsmerkmal 2 ausgeht, an dem Schirm 18 zurück auf das Sicherheitsdokument 3 reflektiert und erzeugt dort die Projektionspunkte 33. Hierbei geht die Polarisationseigenschaft des von den Projektionspunkten ausgehen Licht 9" verloren, so dass dieses den Schirm 18 passieren kann und von der Erfassungseinrichtung 19 erfassbar ist.

Bei einem Beispiel ähnlich zu dem nach Fig. 4, bei der der Schirm an der dem Sicherheitsdokument zugewandten Seite teilverspiegelt ist und nicht schaltbar ausgebildet ist, sind ebenfalls Projektionspunkte durch den teilverspiegelten Schirm wahrnehmbar.

### Bezugszeichenliste

- 1: Verifikationsvorrichtung
- 2: Sicherheitsmerkmal
- 3: Sicherheitsdokument
- 4: Auflageplatte
- 5: Auflageebene
- 6: Pfeile
- 7: Beleuchtungseinrichtung
- 8: Lichtquelle
- 9: gerichtetes Licht
- 9': reflektiertes Licht
- 9": von Projektionspunkten ausgehendes Licht
- 10: steuerbares optisches Element
- 11: Ausleuchtungsbereich
- 12: x-Richtung
- 13: y-Richtung
- 14: Koordinatensystem
- 15: Steuereinrichtung
- 16, 17: reflektiertes/gebeugtes Licht
- 18: Schirm
- 19: Erfassungseinrichtung
- 20: Reflexions- und/oder Streupunkte
- 22: Abstand
- 23: Auswerteeinrichtung
- 30: Schirm
- 31: kegelförmige Elemente
- 32: Reflexions- und/oder Streupunkte
- 33: Projektionspunkte

## Patentansprüche

1. Verifikationsvorrichtung (1) für Sicherheitsdokumente (3) mit mindestens einem beugenden und/oder reflektierenden Sicherheitsmerkmal (2), wobei die Verifikationsvorrichtung (1) umfasst:
eine Auflageeinrichtung mit einer Auflageebene (5) zum Auflegen des Sicherheitsdokuments (3)
eine optische Erfassungeinsrichtung (19),
eine Beleuchtungseinrichtung (7), mit der das Sicherheitsdokument (3) beleuchtbar ist, und
eine Auswerteeinrichtung (23), die die mit der Erfassungseinrichtung (19) erfassten Informationen auswertet, um eine Verifikation des mindestens einen Sicherheitsmerkmals (2) auszuführen,
sowie einen zwischen der Auflageebene (5) und der Erfassungseinrichtung (19) angeordneten Schirm (18), zum Abbilden von von dem mindestens einen Sicherheitsmerkmal (2) gebeugten oder reflektierten Licht für ein Erfassen durch die Erfassungseinrichtung (19),
**dadurch gekennzeichnet, dass**
der Schirm (18) hinsichtlich mindestens einer seiner optischen Eigenschaften,
welche seine Opazität und/oder Reflektivität umfassen, steuerbar ist.

2. Verifikationsvorrichtung (1) nach Anspruch 1, **dadurch gekennzeichnet, dass** der Schirm (18) ausgebildet so ist, dass auf dem Schirm von dem mindestens einen Sicherheitsmerkmal (2) gebeugtes oder reflektiertes Licht für ein Erfassen durch die Erfassungseinrichtung (19) abbildbar ist.

3. Verifikationsvorrichtung (1) nach Anspruch 1 oder 2, **dadurch gekennzeichnet, dass** das Licht zum Beleuchten des mindestens einen Sicherheitsmerkmals (2) des Sicherheitsdokuments (3) durch den Schirm (18) auf das Sicherheitsmerkmal (2) geführt ist.

4. Verifikationsvorrichtung (1) nach einem der Ansprüche 1 bis 3, **dadurch gekennzeichnet, dass** die Beleuchtungseinrichtung (7) ein getrennt von dem Schirm (18) ausgebildetes und beabstandetes steuerbares optisches Element umfasst, mit dem ein durch einen gerichteten Lichtstrahl in der Auflageebene (5) erzeugter räumlich begrenzter Ausleuchtungsbereich (11) in der Auflageebene (5) flächig positionierbar ist.

5. Verifikationsvorrichtung (1) nach einem der vorangehenden Ansprüche, **dadurch gekennzeichnet, dass** die Opazität des Schirms (18) zwischen einem diffus streuenden Zustand und einem transparenten Zustand variierbar ist.

6. Verifikationsvorrichtung (1) nach einem der vorangehenden Ansprüche, **dadurch gekennzeichnet, dass** eine Transmission des diffus streuenden Zustands veränderbar ist.

7. Verifikationsvorrichtung (1) nach einem der vorangehenden Ansprüche, **dadurch gekennzeichnet, dass** eine Steuereinrichtung (15) mit dem Schirm (18), der Erfassungseinrichtung (19) und der Beleuchtungseinrichtung (7) gekoppelt ist und zum Steuern so ausgebildet ist, dass beim Erfassen der Informationen mittels der Erfassungseinrichtung (19) erste Informationen erfasst werden, während der Schirm (18) im transparenten Zustand ist, und mindestens zweite Informationen erfasst werden, während der Schirm (18) im diffus streuenden Zustand ist.

8. Verifikationsvorrichtung (1) nach einem der vorangehenden Ansprüche, **dadurch gekennzeichnet, dass** die Auswerteeinrichtung (23) ausgebildet ist, aus den ersten Informationen eine Position des mindestens einen beugenden und/oder reflektierenden Sicherheitsmerkmals (2) relativ zu der Auflageebene (5) zu bestimmen und die Steuereinrichtung mit der Beleuchtungseinrichtung (7) gekoppelt ist und die Beleuchtungseinrichtung (7) von dieser so angesteuert wird, dass das mindestens eine beugende und/oder reflektierende Sicherheitsmerkmal (2) gezielt beleuchtet wird, während die zweiten Informationen erfasst werden.

9. Verifikationsvorrichtung (1) nach einem der vorangehenden Ansprüche, **dadurch gekennzeichnet, dass** der Schirm an einer dem Sicherheitsdokument zugewandten Seite hinsichtlich seiner Reflexionseigenschaften steuerbar ist, so dass das von dem mindestens einen Sicherheitsmerkmal (2) gebeugte oder reflektierte Licht für ein Erfassen durch die Erfassungseinrichtung (19) mittels des Schirms auf das Sicherheitsdokument (3) zurücklenkbar und auf dem Sicherheitsdokument (3) abbildbar ist.

10. Verfahren zum Verifizieren eines Sicherheitsdokuments (3) mit mindestens einem beugenden und/oder reflektierenden Sicherheitsmerkmal (2), umfassend folgende Schritte:
Auflegen des Sicherheitsdokuments (3) auf eine Auflageebene (5) einer Auflageeinrichtung,
Beleuchten des Sicherheitsdokuments (3) mit Hilfe einer Beleuchtungseinrichtung (7),
optisches Erfassen von Informationen des mindestens einen Sicherheitsdokuments (3) mittels einer Erfassungseinrichtung (19), wobei das Erfassen ein Erfassen mittels eines Schirms (18) abgebildeten an dem mindestens einen Sicherheitsmerkmal (2) gebeugten oder reflektierten Lichts umfasst, wobei der Schirm (18) zwischen der Auflageebene (5) und der Erfassungseinrichtung (19) angeordnet ist, und
Auswerten der erfassten Informationen, um eine Verifikation des mindestens einen Sicherheitsmerkmals (2) auszuführen,
**dadurch gekennzeichnet, dass**
der Schirm (18) hinsichtlich mindestens einer seiner optischen Eigenschaften, welche seine Opazität und/oder Reflektivität umfassen, gesteuert vor, während oder nach dem Erfassen des mittels des Schirms (18) abgebildeten an dem mindestens einen Sicherheitsmerkmal (2) gebeugten oder reflektierten Lichts verändert wird.

11. Verfahren nach Anspruch 10, **dadurch gekennzeichnet, dass** das Licht zum Beleuchten des mindestens einen Sicherheitsmerkmals (2) des Sicherheitsdokuments (3) durch den Schirm (18) auf das Sicherheitsmerkmal (2) geführt wird.

12. Verfahren nach Anspruch 10 oder 11, **dadurch gekennzeichnet**, das beim Beleuchten des Dokuments (3) ein durch einen gerichteten Lichtstrahl in der Auflageebene (5) erzeugter räumlich begrenzter Ausleuchtungsbereich (11) in der Auflageebene (5) flächig mittels eines getrennt von dem Schirm (18) ausgebildeten und beabstandet angeordneten steuerbaren optischen Element (10) so positioniert wird, dass das mindestens eine beugende und/oder reflektierende Sicherheitsmerkmal (2) zumindest teilweise beleuchtet wird.

13. Verfahren nach einem der Ansprüche 10 bis 12, **dadurch gekennzeichnet, dass** als die optische Eigenschaft die Opazität des Schirms (18) gesteuert wird und hierüber eine Ausdehnung des von durch den Schirm (18) geführten gerichteten Licht (9') erzeugten Ausleuchtungsbereichs (11) in der Auflageebene (5) variiert wird.

14. Verfahren nach einem der Ansprüche 10 bis 13, **dadurch gekennzeichnet, dass** der Schirm (18) zunächst so angesteuert wird, dass dieser transparent ist und von der Erfassungseinrichtung (19) erste Informationen, die vorzugsweise eine fotografische Abbildung repräsentieren, des Sicherheitsdokuments (3) erfasst werden, anschließend die ersten Informationen ausgewertet werden, um die Position des mindestens einen Sicherheitsmerkmals in der Auflageebene (5) zu ermitteln ist und anschließend zweite Informationen erfasst werden, während das mindestens eine beugende und/oder reflektierende Sicherheitsmerkmal (2) zumindest teilweise durch den räumlich begrenzter Ausleuchtungsbereich (11) beleuchtet wird.

15. Verfahren nach einem der Ansprüche 10 bis 14, **dadurch gekennzeichnet, dass** anhand der ermittelten Position des mindestens einen beugenden und/oder reflektierenden Sicherheitsmerkmals (2) in der Auflageebene (5) Referenzinformationen errechnet werden, die mit den erfassten zweiten Informationen vergleichen werden, um das mindestens eine beugende und/oder reflektierende Sicherheitsmerkmal (2) zu verifizieren.

## Claims

1. A verification apparatus (1) for security documents (3) having at least one diffractive and/or reflective security feature (2), wherein the verification apparatus (1) comprises:
a support device having a support surface (5) for placing the security document (3) on it, an optical capturing device (19),
an illuminating device (7), with which the security document (3) can be illuminated, and an evaluation device (23), which evaluates the information items captured using the capturing device (19) in order to verify the at least one security feature (2),
and a screen (18), which is arranged between the support surface (5) and the capturing device (19), for imaging light, which is diffracted or reflected by the at least one security feature (2), for capture by the capturing device (19),
**characterized in that**
the screen (18) is controllable in terms of at least one of its optical properties, comprising its opacity and/or reflectivity.

2. The verification apparatus (1) as claimed in claim 1, **characterized in that** the screen (18) is configured such that light diffracted or reflected by the at least one security feature (2) can be imaged on the screen for capture by the capturing device (19).

3. The verification apparatus (1) as claimed in claim 1 or 2, **characterized in that** the light for illuminating the at least one security feature (2) of the security document (3) is guided through the screen (18) onto the security feature (2).

4. The verification apparatus (1) as claimed in one of claims 1 to 3, **characterized in that** the illuminating device (7) comprises a controllable optical element, which is separate from the screen (18) and arranged at a distance and with which a spatially delimited illumination region (11), which is produced by way of a directed light beam in the support surface (5), can be positioned in the support surface (5) in a two-dimensional manner.

5. The verification apparatus (1) as claimed in one of the preceding claims, **characterized in that** the opacity of the screen (18) is variable between a diffusely scattering state and a transparent state.

6. The verification apparatus (1) as claimed in one of the preceding claims, **characterized in that** a transmission of the diffusely scattering state is variable.

7. The verification apparatus (1) as claimed in one of the preceding claims, **characterized in that** a control device (15) is coupled to the screen (18), the capturing device (19) and the illuminating device (7) and is configured for controlling such that, in the case of the capturing of the information items, first information items are captured using the capturing device (19) while the screen (18) is in the transparent state, and at least second information items are captured while the screen (18) is in the diffusely scattering state.

8. The verification apparatus (1) as claimed in one of the preceding claims, **characterized in that** the evaluation device (23) is configured to determine, from the first information items, a position of the at least one diffractive and/or reflective security feature (2) relative to the support surface (5), and the control device is coupled to the illuminating device (7) and the illuminating device (7) is controlled by it such that the at least one diffractive and/or reflective security feature (2) is illuminated in a directed fashion while the second information items are captured.

9. The verification apparatus (1) as claimed in one of the preceding claims, **characterized in that** the screen on its side which faces the security document is controllable in terms of its reflection properties such that the light which is diffracted or reflected by the at least one security feature (2) can be steered back onto the security document (3) using the screen and imaged on the security document (3) for capture by the capturing device (19).

10. A method for verifying a security document (3) having at least one diffractive and/or reflective security feature (2), comprising the following steps:
placing the security document (3) on a support surface (5) of a support device, illuminating the security document (3) using an illuminating device (7),
optically capturing information items relating to the at least one security document (3) using a capturing device (19), wherein the capturing comprises capturing light which is diffracted or reflected at the at least one security feature (2) and imaged using a screen (18), wherein the screen (18) is arranged between the support surface (5) and the capturing device (19), and
evaluating the captured information items in order to verify the at least one security feature (2),
**characterized in that**
the screen (18) is changed in terms of at least one of its optical properties, comprising its opacity and/or reflectivity, in a controllable fashion before, during or after the capture of the light which is diffracted or reflected at the at least one security feature (2) and imaged using the screen (18).

11. The method as claimed in claim 10, **characterized in that** the light for illuminating the at least one security feature (2) of the security document (3) is guided through the screen (18) onto the security feature (2).

12. The method as claimed in one of claims 10 or 11, **characterized in that** during the illumination of the document (3), a spatially delimited illumination region (11), which is produced in the support surface (5) by a directed light beam, is positioned in a two-dimensional manner in the support surface (5) using a controllable optical element (10), which is separate from the screen (18) and arranged at a distance, such that the at least one diffractive and/or reflective security feature (2) is at least partially illuminated.

13. The method as claimed in one of claims 10 to 12, **characterized in that** the opacity of the screen (18) is controlled, as the optical property, by means of which an extent of the illumination region (11), which is produced by directed light (9') that is guided through the screen (18), in the support surface (5) is varied.

14. The method as claimed in one of claims 10 to 13, **characterized in that** the screen (18) is first driven such that said screen is transparent and that first information items, which preferably represent a photographic image, of the security document (3) are captured by the capturing device (19), subsequently the first information items are evaluated so as to ascertain the position of the at least one security feature in the support surface (5) and subsequently, second information items are captured, while the at least one diffractive and/or reflective security feature (2) is illuminated at least partially by the spatially delimited illumination region (11).

15. The method as claimed in one of claims 10 to 14, **characterized in that** reference information items are calculated on the basis of the ascertained position of the at least one diffractive and/or reflective security feature (2) in the support surface (5) and are compared to the captured second information items in order to verify the at least one diffractive and/or reflective security feature (2).

## Revendications

1. Dispositif de vérification (1) pour des documents de sécurité (3) avec au moins une caractéristique de sécurité (2) diffractive et/ou réfléchissante, dans lequel le dispositif de vérification (1) comprend :
un système de support avec un plan de support (5) servant à supporter le document de sécurité (3),
un système de détection (19) optique,
un système d'éclairage (7), avec lequel le document de sécurité (3) peut être éclairé, et
un système d'analyse (23), qui analyse les informations détectées avec système de détection (19) pour exécuter une vérification de l'au moins une caractéristique de sécurité (2),
ainsi qu'un écran (18) disposé entre le plan de support (5) et le système de détection (19), servant à reproduire la lumière diffractée ou réfléchie par l'au moins une caractéristique de sécurité (2) pour une détection par le système de détection (19), **caractérisé en ce**
**que** l'écran (18) peut être commandé eu égard au moins à l'une de ses propriétés optiques, qui comprennent son opacité et/ou sa réflectivité.

2. Dispositif de vérification (1) selon la revendication 1, **caractérisé en ce que** l'écran (18) est réalisé de telle manière que la lumière diffractée ou réfléchie sur l'écran par l'au moins une caractéristique de sécurité (2) peut être reproduite pour une détection par le système de détection (19).

3. Dispositif de vérification (1) selon la revendication 1 ou 2, **caractérisé en ce que** la lumière servant à éclairer l'au moins une caractéristique de sécurité (2) du document de sécurité (3) est guidée à travers l'écran (18) sur la caractéristique de sécurité (2).

4. Dispositif de vérification (1) selon l'une quelconque des revendications 1 à 3, **caractérisé en ce que** le système d'éclairage (7) comprend un élément optique pouvant être commandé réalisé séparément de l'écran (18), disposé à distance, avec lequel une zone d'illumination (11) délimitée spatialement, produite dans le plan de support (5) par un rayon de lumière orienté peut être positionnée à plat dans le plan de support (5).

5. Dispositif de vérification (1) selon l'une quelconque des revendications précédentes, **caractérisé en ce que** l'opacité de l'écran (18) peut varier entre un état de diffusion diffuse et un état transparent.

6. Dispositif de vérification (1) selon l'une quelconque des revendications précédentes, **caractérisé en ce qu'**une transmission de l'état de diffusion diffuse peut varier.

7. Dispositif de vérification (1) selon l'une quelconque des revendications précédentes, **caractérisé en ce qu'**un système de commande (15) est couplé à l'écran (18), au système de détection (19) et au système d'éclairage (7) et est réalisé aux fins de la commande de telle manière que lors de la détection des informations au moyen du système de détection (19), des premières informations sont détectées, alors que l'écran (18) est dans l'état transparent, et au moins des deuxièmes informations sont détectées alors que l'écran (18) est dans l'état de diffusion diffuse.

8. Dispositif de vérification (1) selon l'une quelconque des revendications précédentes, **caractérisé en ce que** le système d'analyse (23) est réalisé pour déterminer à partir des premières informations une position de l'au moins une caractéristique de sécurité (2) diffractive et/ou réfléchissante, par rapport au plan de support (5), et le système de commande est couplé au système d'éclairage (7) et le système d'éclairage (7) est piloté par ce dernier de telle manière que l'au moins une caractéristique de sécurité (2) diffractive et/ou réfléchissante est éclairée de manière ciblée, tandis que les deuxièmes informations sont détectées.

9. Dispositif de vérification (1) selon l'une quelconque des revendications précédentes, **caractérisé en ce que** l'écran peut être commandé, au niveau d'un côté tourné vers le document de sécurité, eu égard à ses propriétés de réflexion de telle sorte que la lumière diffractée ou réfléchie par l'au moins une caractéristique de sécurité (2) peut être réorientée sur le document de sécurité (3) pour une détection par le système de détection (19) au moyen de l'écran et peut être reproduite sur le document de sécurité (3).

10. Procédé servant à vérifier un document de sécurité (3) avec au moins une caractéristique de sécurité (2) diffractive et/ou réfléchissante, comprenant les étapes suivantes consistant à :
supporter sur un plan de support (5) d'un système de support le document de sécurité (3),
éclairer le document de sécurité (3) à l'aide d'un système d'éclairage (7),
détecter optiquement des informations de l'au moins un document de sécurité (3) au moyen d'un système détection (19), dans lequel la détection comprend une détection de lumière reproduite au moyen d'un écran (18) et diffractée ou réfléchie au niveau de l'au moins une caractéristique de sécurité (2), dans lequel l'écran (18) est disposé entre le plan de support (5) et le système de détection (19), et
analyser les informations détectées pour exécuter une vérification de l'au moins une caractéristique de sécurité (2),
**caractérisé en ce**
**que** l'écran (18) est modifié eu égard à au moins une de ses propriétés optiques, qui comprennent son opacité et/ou sa réflectivité, par une commande avant, au cours ou après la détection de la lumière reproduite au moyen de l'écran (18), diffractée ou réfléchie au niveau de l'au moins une caractéristique de sécurité (2).

11. Procédé selon la revendication 10, **caractérisé en ce que** la lumière servant à éclairer l'au moins une caractéristique de sécurité (2) du document de sécurité (3) est guidée à travers l'écran (18) sur la caractéristique de sécurité (2).

12. Procédé selon la revendication 10 ou 11, **caractérisé en ce que** lors de l'éclairage du document (3), une zone d'illumination (11) délimitée spatialement produite par un rayon de lumière orienté dans le plan de support (5) est positionnée dans le plan de support (5) à plat au moyen d'un élément (10) optique pouvant être commandé réalisé séparément de l'écran (18) et disposé à distance de telle manière que l'au moins une caractéristique de sécurité (2) diffractive et/ou réfléchissante est éclairée au moins en partie.

13. Procédé selon l'une quelconque des revendications 10 à 12, **caractérisé en ce que** l'opacité de l'écran (18) est commandée en tant que propriété optique, et ce faisant une extension de la zone d'illumination (11) produite par la lumière (9') orientée dirigée à travers l'écran (18) varie dans le plan de support (5).

14. Procédé selon l'une quelconque des revendications 10 à 13, **caractérisé en ce que** l'écran (18) est piloté dans un premier temps de telle manière que ce dernier est transparent, et **en ce que** des premières informations, qui représentent de préférence une reproduction photographique, du document de sécurité (3) sont détectées par le système de détection (19), **en ce qu'**immédiatement après les premières informations sont analysées pour déterminer la position de l'au moins une caractéristique de sécurité dans le plan de support (5), et **en ce qu'**immédiatement après des deuxièmes informations sont détectées, tandis que l'au moins une caractéristique de sécurité (2) diffractive et/ou réfléchissante est éclairée au moins en partie par la zone d'illumination (11) délimitée spatialement.

15. Procédé selon l'une quelconque des revendications 10 à 14, **caractérisé en ce que** sont calculées, à l'aide de la position déterminée de l'au moins une caractéristique de sécurité (2) diffractive et/ou réfléchissante dans le plan de support (5), des informations de référence, qui sont comparées à des deuxièmes informations détectées pour vérifier l'au moins une caractéristique de sécurité (2) diffractive et/ou réfléchissante.
